# EUROPÄISCHE PATENTANMELDUNG

(11) **EP 0 943 471 A1**
(43) Veröffentlichungstag der Anmeldung: **22.09.1999**
(21) Anmeldenummer: 99102676.6
(22) Anmeldetag: 12.02.1999
(51) Int. Cl.: B60H 1/32

(54) **Verfahren zum Betrieb einer Kraftfahrzeug-Klimaanlage mit einem Kompressor mit Schmiermittelumwälzung**

(30) Priorität: 19.03.1998 DE 19812171
(71) Anmelder: DaimlerChrysler AG, 70567 Stuttgart (DE)
(72) Erfinder: Hanselmann, Klaus, 71131 Jettingen (DE); Heinle, Dieter, 73655 Plüderhausen (DE); Straub, Wolfgang, 73326 Deggingen (DE)

(57) **Zusammenfassung**

Die Erfinderung bezieht sich auf ein Verfahren zum Betrieb einer Kraftfahrzeug-Klimaanlage mit einem von umgewälztem Schmiermittel geschmierten Kompressor.

Erfindungsgemäß wird der Kompressor nach dem Starten mindestens für eine vorgegebene Mindestschmierdauer in schmiermittelumwälzendem Betrieb gehalten.

Verwendung z.B. in Automobilen.

## Beschreibung

Die Erfindung bezieht sich auf ein Verfahren zum Betrieb einer Kraftfahrzeug-Klimaanlage mit einem von umgewälztem Schmiermittel geschmierten Kompressor.

Es ist bekannt, in Kraftfahrzeug-Klimaanlagen sogenannte extern geregelte Kompressoren einzusetzen, worunter solche Kompressoren verstanden werden, deren Leistung in Stufen oder stufenlos variabel von außen gesteuert werden kann, um die Klimaanlagenleistung auf einen gewünschten Wert einzustellen, was bei herkömmlichen Klimaanlagen ohne Leistungsregelbarkeit des Kompressors dadurch bewirkt wird, daß dieser über eine Magnetkupplung oder dergleichen in geeigneter Weise getaktet ein- und ausgeschaltet, d.h. an einen mechanischen Antrieb, wie den Kraftfahrzeugmotor, angekoppelt wird. Solche extern geregelten Kompressoren und Verfahren zu ihrer Steuerung sind z.B. in der Patentschrift DE 38 43 924 C2 und der deutschen Patentanmeldung Nr. 196 42 832.7 beschrieben.

Gerade auch solche extern geregelten Kompressoren werden häufig mit einem umgewälzten Schmiermittel in Form eines geeigneten Schmieröls geschmiert, das als Zusatz zum Kältemittel zugegeben wird und mit diesem im Kältemittelkreislauf umgewälzt wird. Da bei extern geregelten Kompressoren, die ohne Kupplung an ihren mechanischen Antrieb angeschlossen sind, deren mechanisch beweglicher Teil auch ohne angeforderte Kompressorleistung und bei tiefen Außentemperaturen ständig mitläuft, ist eine ausreichende Schmiermittelversorgung für diesen Kompressortyp von besonderer Bedeutung.

Es ist des weiteren bekannt, daß bei einem jeweiligen Start des Kühlbetriebs von Kraftfahrzeug-Klimaanlagen die Gefahr der sogenannten 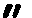 Flash-Fog" -Bildung besteht, indem beim Anlagenstart der über die noch nasse Verdampferoberfläche geführte Luftstrom angefeuchtet wird und an den Innenseiten angeblasener Fahrzeugscheiben zu Scheibenbeschlag führt. Zur Vermeidung dieses Effektes ist es bekannt, die Klimaanlage jeweils im sogenannten Reheat-Betrieb, d.h. im Entfeuchtungsbetrieb, zu starten, in welchem der Kältemittelkreislauf auf maximale Kühlleistung eingestellt und die dadurch abgekühlte, getrocknete Luft an einem Heizkörper wieder geeignet erwärmt wird. Je nach eigentlichem Kühlleistungsbedarf wird dann nach einer gewissen Zeit vom Reheat-Betrieb allmählich auf die eigentlich gewünschte Betriebsweise übergegangen, bei Anlagen mit sogenanntem intern geregeltem, d.h. über eine Kupplung aktiviertem und deaktiviertem Kompressor beispielsweise dadurch, daß der im Reheat-Betrieb ständig angekonnelte Kompressor alternierend ab- und angekuppelt wird und die Abkupplungszeitintervalle geeignet verlängert werden.

Der Erfindung liegt als technisches Problem die Bereitstellung eines Verfahrens zugrunde, mit dem sich eine Kraftfahrzeug-Klimaanlage, die einen mit einem umgewälzten Schmiermittel geschmierten Kompressor aufweist, so betreiben läßt, daß stets eine ausreichende Schmiermittelversorgung des Kompressors gewährleistet ist.

Die Erfindung löst dieses Problem durch die Bereitstellung eines Verfahrens mit den Merkmalen des Anspruchs 1. Bei diesem Verfahren wird der Kompressor nach dem Starten mindestens für eine vorgegebene Mindestschmierdauer in schmiermittelumwälzendem Betrieb gehalten. Durch geeignete Vorgabe dieser Mindestschmierdauer werden zu kurze Kompressorlaufzeiten vermieden, die zu einer Schmiermittelunterversorgung des Kompressors führen könnten. Andererseits kann bei entsprechender Betriebssituation die Aufrechterhaltung des schmiermittelumwälzenden Kompressorbetriebs während der Mindestschmierdauer nach einem jeweiligen Neustart mit einem anfänglichen Reheat-Betrieb der Anlage zwecks Vermeidung des Flash-Fog-Effektes kombiniert sein. Durch die Aufrechterhaltung des schmiermittelumwälzenden Kompressorbetriebs für die geeignet vorgegebene Mindestschmierdauer wird gewährleistet, daß im Fall eines dem Kältemittel als Additiv zugegebenen und mit ihm im Kältemittelkreislauf umgewälzten Schmiermittels dieses nach einem Neustart der Anlage nach Umwälzung im Kältemittelkreislauf wieder ausreichend dem Kompressor zur Schmierung zugeführt wird.

Bei einem nach Anspruch 2 weitergebildeten Verfahren wird vorteilhafterweise die Mindestschmierdauer außentemperaturabhängig variabel vorgegeben, wobei für höhere Außentemperaturen geringere Mindestschmierdauern gewählt sind als für niedrigere Außentemperaturen. Da im Reheat-Betrieb mit steigender Außentemperatur mehr Kondenswasser gebildet wird, vermeidet die kürzere Mindestschmierdauer bei höheren Außentemperaturen die Bildung unerwünscht hoher Kondenswassermengen.

Bei einem nach Anspruch 3 weitergebildeten Verfahren wird der Kompressor mindestens während eines anfänglichen Teils der Mindestschmierdauer mit maximaler Leistung betrieben, wodurch dem Flash-Fog-Effekt entgegengewirkt wird, um dann die Kompressorleistung gleitend auf den benutzerangeforderten Wert zu führen. Dieser gleitende Übergang erfolgt in einer weiteren Ausgestaltung der Erfindung gemäß Anspruch 4 mit einem PT1-Zeitverhalten, wie es durch Verwendung eines herkömmlichen PT1-Elementes realisierbar ist.

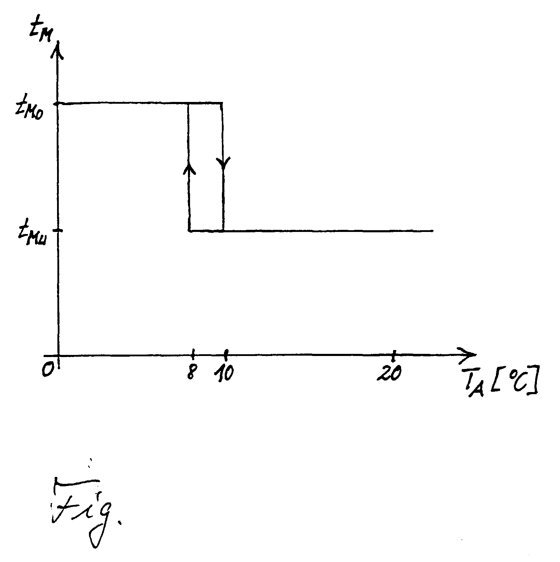

Vorteilhafte Ausführungsbeispiele der Erfindung werden nachfolgend unter Bezugnahme auf die Zeichnung beschrieben.

Die einzige Figur zeigt ein Diagramm der Mindestschmierdauer, während der ein von umgewälztem Schmiermittel geschmierter Kompressor einer Kraftfahrzeug-Klimaanlage nach dem Starten mindestens in schmiermittelumwälzendem Betrieb gehalten wird, in Abhängigkeit von der Fahrzeugaußentemperatur.

Mit dem erfindungsgemäßen Verfahren wird eine jeweilige Kraftfahrzeug-Klimaanlage, die einen mit einem umgewälzten Schmiermittel geschmierten Kompressor aufweist, so betrieben, daß der Kompressor nach einem jeweiligen Neustart der Anlage mindestens für eine vorgegebene Mindestschmierdauer in schmiermittelumwälzendem Betrieb gehalten wird. Vorzugsweise wird als Kompressor ein extern geregelter Kompressor verwendet, der mit Schmieröl geschmiert wird, das dem Kältemittel der Klimaanlage beigemischt ist und mit diesem im Kältemittelkreislauf umgewälzt wird. Dadurch, daß der Kompressor nach dem Starten mindestens für die vorgegebene Mindestschmierdauer in schmiermittelumwälzendem Betrieb gehalten wird, selbst dann, wenn schon vor Ablauf derselben keine Kühlleistung der Klimaanlage mehr angefordert wird, wird sichergestellt, daß das im Kältemittelkreislauf umgewälzte Schmieröl über Kondensator, Expansionsventil und Verdampfer der Klimaanlage wieder ausreichend dem Kompressor zugeführt wird, bevor dieser gegebenenfalls wieder deaktiviert wird. Dies gewährleistet, daß auch ein extern geregelter Kompressor ohne Kupplung, dessen Mechanik auch ohne angeforderte Verdichterleistung und bei tiefen Außentemperaturen ständig mitläuft, ausreichend mit Schmiermittel versorgt wird.

Vorzugsweise ist die Mindestschmierdauer außentemperaturabhängig variabel gewählt, und zwar für niedrigere Außentemperaturen höher als für höhere Außentemperaturen. Ein derartiges Ausführungsbeispiel ist in der Figur in Diagrammform veranschaulicht. In diesem Beispiel ist eine Mindestschmierdauer t_{M} gewählt, die in einem niedrigeren Bereich der Außentemperatur T_{A} von hier kleiner als 8°C auf einen höheren Wert t_{Mo} eingestellt ist als in einem höheren Außentemperaturbereich von hier größer als 10°C, in welchem sie auf einen niedrigeren Wert t_{Mu} eingestellt ist. Im Übergangsbereich der Außentemperatur T_{A} zwischen 8°C und 10°C ist in der durch Richtungspfeile in der Figur angegebenen Weise eine Hysterese gebildet, um unerwünschte Umschalteffekte bei geringfügiger Überschreitung der jeweiligen Bereichsgrenze zu vermeiden. Wie gezeigt ist die Hysterese so gewählt, daß die Mindestschmierdauer t_{M} vom höheren Wert t_{Mo} zum niedrigeren Wert t_{Mu} wechselt, wenn die Außentemperatur T_{A} von unten kommend über 10°C ansteigt, während die Mindestschmierdauer t_{M} vom niedrigen Wert t_{Mu} auf den höheren Wert t_{Mo} erst wechselt, wenn die Außentemperatur T_{A} von oben kommend den Wert von 8°C unterschreitet.

Beispielhaft können der untere Wert t_{Mu} für die Mindestschmierdauer T_{M} 30 Sekunden und deren oberer Wert t_{Mo} 60 Sekunden betragen, es versteht sich jedoch, daß je nach Anwendungsfall beliebige andere Wertefestlegungen getroffen werden können. Selbstverständlich kann der Übergang statt im gezeigten Bereich zwischen 8°C und 10°C auch in einem anderen Bereich der Außentemperatur T_{A} erfolgen. Eine weitere Alternative besteht darin, statt der gezeigten einstufigen Abhängigkeit der Mindestschmierdauer t_{M} von der Außentemperatur T_{A} die Mindestschmierdauer t_{M} als mehrstufige Treppenfunktion oder als beliebige andere, z.B. stetige Funktion in Abhängigkeit von der Außentemperatur T_{A} vorzugeben, wobei die Mindestschmierdauer t_{M} vorzugsweise mit steigender Außentemperatur T_{A} abfällt.

Nachfolgend werden einige mögliche Realisierungen dieses Verfahrens in detaillierterer Implementierung in einer Kraftfahrzeug-Klimaanlage beschrieben, die zwischen Kühlbetrieb und Nichtkühlbetrieb umschaltbar ist, wobei im Nichtkühlbetrieb des weiteren zwischen Frischluftbetrieb und Umluftbetrieb umgeschaltet werden kann, wie für Kraftfahrzeug-Klimaanlagen an sich bekannt.

Allgemein ist für den erfindungsgemäßen Betrieb solcher Klimaanlagen vorgesehen, daß nach dem jeweiligen Neustart oder manueller Aktivierung des Anlagenbetriebs für maximale Entfeuchtung, z.B. durch Anwahl eines Reheat-Betriebs oder eines der raschen Beseitigung einer Scheibenvereisung dienenden Defrost-Betriebsmodus, die Anlage und damit auch der Kompressor zunächst mit maximaler Kühlleistung beispielsweise im Reheat-Betrieb betrieben wird. Durch die Vorgabe der Mindestschmierdauer wird für den Kompressor in jedem Fall ein Ölumlaufbetrieb während dieser Zeitdauer aufrechterhalten. Die Mindestschmierdauer ist, wie vorstehend zur Figur erläutert, als die zur Aufrechterhaltung der internen Schmierung des Kompressors notwendige Mindestlaufzeit desselben abhängig von der Außentemperatur gewählt. Der Kompressor wird während dieser Mindestschmierdauer in seinem schmiermittelumwälzenden Betrieb selbst dann gehalten, wenn bereits vor Ablauf dieser Zeitdauer von einem Benutzer der Kühlleistungsbedarf durch die Klimaanlage wieder auf null zurückgestellt wurde. Andererseits wird der anfängliche Ölumlauf- bzw. Reheat-Betrieb möglichst kurz gehalten, um die sich in dieser Betriebsart am Verdampfer abscheidende Kondensatmenge möglichst klein zu halten.

Bei Verwendung eines extern geregelten Kompressors ist eine bedarfsgerechte Klimatisierung und damit ein verbrauchsoptimierter Klimatisierungsbetrieb möglich, bei dem gleitend, d.h. allmählich, vom anfänglichen Ölumlauf- bzw. Reheat-Betrieb mit maximaler Kompressorleistung in den an sich geforderten Regelbetrieb mit minimierter Kühlleistung oder mit Heizbetrieb so übergegangen wird, daß sich kein Scheibenbeschlag bildet. Diese Übergangsphase wird dadurch bewirkt, daß der Steuerstrom eines für den extern geregelten Kompressor üblicherweise vorgesehenen Regelventils sukzessive zurückgenommen wird, wobei der Übergangszeitraum variabel den Fahrzeugbedingungen, insbesondere hinsichtlich Innenraumvolumen und Scheibenflächen, angepaßt ist und außerdem weitere klimatisierungsrelevante Einflußgrößen verarbeitet werden, wie Fahrgeschwindigkeit, Luftmenge, Sonnensensorsignal, Anzahl der Fahrzeuginsassen zur Berücksichtigung von Feuchteeintrag durch dieselben, aktivierter Umluftbetrieb und/oder Luftfeuchtigkeitsinformationen.

In einer speziellen Implementierung wird zur Steuerung des gleitenden Übergangs vom anfänglichen Ölumlauf- bzw. Reheat-Betrieb mit maximaler Kompressorleistung auf die benutzerangeforderte Anlagenbetriebsweise ein herkömmliches PT1-Element verwendet, mittels dem nach Ablauf der Mindestschmierdauer während der Zeitkonstanten T1 dieses PT1-Elementes von beispielsweise zwei Minuten auf die benutzerangeforderte Betriebsweise umgestellt wird. Selbst wenn innerhalb der Mindestbetriebsdauer nach einem Anlagenneustart vom Benutzer ein Abschalten der Kühlleistung angefordert wird, wird der Kompressor für die Mindestschmierdauer in Betrieb gehalten. Der Reheat-Betrieb für den Ölumlauf verlängert sich durch manuelle Anforderung des Umluftbetriebs um die Dauer des manuell eingestellten Umluftbetriebs, höchstens jedoch so lange, bis das Zeitglied für den Umluftbetrieb abgelaufen ist. Das PT1-Dämpfungsglied wird auch nach einer Deaktivierung der Betriebsarten Reheat und Defrost eingesetzt, um zur neuen Betriebsart zu wechseln.

In einer weiteren möglichen Implementierung wird der Kompressor beim Einschalten der Zündung, wenn die Klimaanlage auf Kühlbetrieb eingestellt ist, oder nach manueller Aktivierung des Kühlbetriebs für die vorgegebene Mindestschmierdauer dadurch mit maximaler Leistung in Betrieb gehalten, daß für die in der Klimaanlage vorhandene Klimatisierungsregeleinheit als Sollwert der Verdampfertemperatur der minimal mögliche Temperaturwert vorgegeben wird. Nach Ablauf der Mindestschmierdauer wird dann der Verdampfertemperatur-Sollwert mittels des PT1-Elementes gleitend während der zugehörigen Zeitkonstante von z.B. zwei Minuten auf den zur benutzerangeforderten Kühlleistung gehörigen Wert geführt. Der Trocknungsbetrieb ist dabei während eingeschalteter Zündung nur einmal möglich. Wird vor Ablauf der Mindestschmierdauer der Kühlbetrieb benutzerangefordert deaktiviert, läuft der Kompressor trotzdem bis zum Ende der Mindestschmierdauer weiter. In gleicher Weise wird der Kompressorbetrieb für die Mindestschmierdauer aufrechterhalten, wenn der Defrost-Betrieb aktiviert und dann vor Ablauf der Mindestschmierdauer wieder deaktiviert wird. Bei manuell eingeschaltetem Umluftbetrieb während des Trocknungsbetriebs wird der Trocknungsbetrieb aufrechterhalten, bis der Umluftbetrieb entweder manuell oder automatisch gelöscht wird.

## Patentansprüche

1. Verfahren zum Betrieb einer Kraftfahrzeug-Klimaanlage mit einem von umgewälztem Schmiermittel geschmierten Kompressor,
**dadurch gekennzeichnet**, **daß** der Kompressor nach dem Starten mindestens für eine vorgegebene Mindestschmierdauer (t_{M}) in schmiermittelumwälzendem Betrieb gehalten wird.

2. Verfahren nach Anspruch 1, weiter
**dadurch gekennzeichnet**, **daß**
die Mindestschmierdauer (t_{M}) außentemperaturabhängig variabel für niedrigere Außentemperaturen höher gewählt ist als für höhere Außentemperaturen.

3. Verfahren nach Anspruch 1 oder 2, weiter
**dadurch gekennzeichnet**, **daß**
der Kompressor mindestens während eines anfänglichen Teils der Mindestschmierdauer mit maximaler Leistung betrieben und anschließend die Kompressorleistung gleitend auf den benutzerangeforderten Wert geführt wird.

4. Verfahren nach Anspruch 3, weiter
**dadurch gekennzeichnet**, **daß**
der Übergang von der maximalen Kompressorleistung zur benutzerangeforderten Kompressorleistung nach einem PT1-Zeitverhalten erfolgt.
